# EUROPEAN PATENT SPECIFICATION

(11) **EP 3 481 142 B1**
(45) Date of publication and mention of the grant of the patent: **28.10.2020**
(21) Application number: 16911931.0
(22) Date of filing: 08.08.2016
(51) Int. Cl.: H04W 88/02, H04B 7/02, H04H 20/22

(54) **DATA TRANSMISSION METHOD AND TRANSMITTING TERMINAL DEVICE**
DATENSENDEVERFAHREN UND SENDEENDGERÄTEVORRICHTUNG
PROCÉDÉ DE TRANSMISSION DE DONNÉES ET DISPOSITIF TERMINAL DE TRANSMISSION

(43) Date of publication of application: 08.05.2019
(73) Proprietor: Huawei Technologies Co., Ltd., Longgang District Shenzhen, Guangdong 518129 (CN)
(72) Inventor: FENG, Shulan, Shenzhen Guangdong 518129 (CN); CHANG, Junren, Shenzhen Guangdong 518129 (CN); ZHANG, Xiangdong, Shenzhen Guangdong 518129 (CN); ZHANG, Liangliang, Shenzhen Guangdong 518129 (CN)
(74) Representative: Maiwald Patent- und Rechtsanwaltsgesellschaft mbH
(86) International application number: PCT/CN2016/093951
(87) International publication number: WO 2018/027475

(56) References cited:
- EP-A2- 2 197 130
- CN-A- 101 843 124
- CN-A- 102 474 721
- CN-A- 103 580 727
- US-A- 5 940 444
- US-A- 6 088 351
- US-A1- 2001 019 592
- US-A1- 2005 254 592
- US-A1- 2012 039 391
- US-A1- 2015 180 699

## Description

### TECHNICAL FIELD

Embodiments of the present invention relate to the communications field, and in particular, to data transmission in a communications system.

### BACKGROUND

At present, in fields such as telemedicine, remote industrial control, and virtual reality, new requirements are imposed on communications systems. For example, an IMT-2020 oriented fifth generation mobile communications system requires that in a deep coverage (164 dB coverage) scenario, data packets of approximately 300 KB (kilobytes) should be transmitted within 1 millisecond with reliability indicated by using a block error rate of less than 10⁻⁵, in other words, a data transmission rate needs to reach 300 Mbps (megabits per second). However, an existing communications system cannot simultaneously satisfy such requirements for a low delay (1 millisecond), high reliability (the block error rate less than 10⁻⁵), and a high rate (300 Mbps).

An existing relatively advanced wireless communications system is an LTE-Advanced (an evolution of LTE) wireless communications system defined by 3GPP. In the LTE-Advanced system, a theoretical uplink peak rate is 500 Mbps, and a block error rate during each transmission is 10⁻¹. In actual operation, a rate is usually approximately 100 Mbps. Because a block error rate during each transmission is 10⁻¹ in LTE, to satisfy a reliability requirement of a block error rate of 10⁻⁵, retransmission is inevitable, and retransmission greatly increases a transmission delay and reduces a transmission rate. Regardless of a retransmission feedback delay, to improve reliability from the block error rate of 10⁻¹ to the block error rate of 10⁻⁵, five times of retransmission are required, and a rate is reduced to 1/5 of the original rate. Therefore, an amount of data that can be transmitted at the block error rate of 10⁻⁵ within 1 ms is 125 KB, and a requirement for transmitting data of 300 KB within 1 ms at the bit error rate of 10⁻⁵ cannot be satisfied.
US 6 088 351 A1 describes methods and apparatuses for a digital audio radio system where multiple digital data versions of a single source signal are transmitted to one or more satellites to be rebroadcast to a defined reception area where the multiple versions are delayed with respect to each other.
One of the signals is intended to be used by a mobile receiver if the transmission from the satellite is not blocked, and the other one or more versions are intended to be used if the broadcast signal from the satellites is blocked.

Therefore, it is difficult for an existing communications system to simultaneously satisfy the requirements for a low delay, high reliability, and a high rate.

### SUMMARY

Aspects of the present invention provide a data transmission method, and a data transmission apparatus as defined by the independent claims, so as to satisfy requirements for both a low delay and high reliability of data transmission. Further embodiments are provided in the dependent claims. Further embodiments of the description not falling under the scope of protection of the claims are provided for explanatory purpose only.

Herein described is a data transmission method, where the method includes:
generating, by a transmit end device, at least first data and second data based on to-be-transmitted data, where a size of the first data and a size of the second data are different; and
sending, by the transmit end device, the first data by using a first transmission channel, and sending the second data by using a second transmission channel, where a transmission delay of the first transmission channel is different from a transmission delay of the second transmission channel.

Herein described is a data transmission apparatus, where the apparatus includes:
a generation unit, configured to generate at least first data and second data based on to-be-transmitted data, where a size of the first data and a size of the second data are different; and
a sending unit, configured to send the first data by using a first transmission channel, and send the second data by using a second transmission channel, where a transmission delay of the first transmission channel is different from a transmission delay of the second transmission channel.

Herein described is a transmit end device, where the transmit end device includes:
a processor, configured to generate at least first data and second data based on to-be-transmitted data, where a size of the first data and a size of the second data are different; and
a transmitter, configured to send the first data by using a first transmission channel, and send the second data by using a second transmission channel, where a transmission delay of the first transmission channel is different from a transmission delay of the second transmission channel.

In this embodiment of the present invention, a plurality of pieces of data of different sizes are generated based on the to-be-transmitted data, and the generated pieces of data are separately transmitted by using transmission channels with different delays. Therefore, this embodiment of the present invention can simultaneously satisfy a low delay, high reliability, and a high rate of data transmission.

In one example, the size of the first data is smaller than the size of the second data, and the transmission delay of the first transmission channel is lower than the transmission delay of the second transmission channel.

In another example, the size of the first data is smaller than the size of the second data, and a capacity of the first transmission channel is smaller than a capacity of the second transmission channel. In this case, a total delay in transmitting the first data and the second data is low.

In still another example, the size of the first data is smaller than the size of the second data, and a capacity of the first transmission channel is greater than a capacity of the second transmission channel. In this case, a delay in transmitting the first data is lower, and a receive end device can receive the first data in a shorter time, so that a user can obtain required information in time, thereby improving user experience.

In one example, the first data includes a first identifier, and the second data includes a second identifier, where the first identifier and the second identifier are used to indicate whether the first data and the second data come from a same information source.

In one example, the generating, by a transmit end device, at least first data and second data based on to-be-transmitted data, where a size of the first data and a size of the second data are different is specifically:
compressing, by the transmit end device, the to-be-transmitted data based on different compression ratios, to obtain the first data and the second data that are with different sizes.

In another example, the first data is basic data, and the second data is enhanced data; the basic data is data, with an important function and small size, that is obtained by using the to-be-transmitted data, and the enhanced data is data, with a secondary function and large size, that is obtained by using the to-be-transmitted data.

In one example, that a transmission delay of the first transmission channel is different from a transmission delay of the second transmission channel includes any one or more of the following:
a quantity of communications devices on the first transmission channel is different from a quantity of communications devices on the second transmission channel;
an access mode of an access device on the first transmission channel is different from an access mode of an access device on the second transmission channel;
a frequency band that is used by the first transmission channel is different from a frequency band that is used by the second transmission channel;
a coverage area of the access device on the first transmission channel is different from a coverage area of the access device on the second transmission channel; and
a capacity of the first transmission channel is different from a capacity of the second transmission channel.

According to a fourth aspect, the present invention provides another data transmission method, where the method includes:
receiving, by a receive end device, first data from a first transmission channel, and processing the first data; and
receiving, by the receive end device, second data from a second transmission channel, determining whether the second data and the first data come from a same information source, and processing the second data if the first data and the second data are data from the same information source, where
a size of the first data is different from a size of the second data, and a transmission delay of the first transmission channel is different from a transmission delay of the second transmission channel.

According to a fifth aspect, an embodiment of the present invention provides another data transmission apparatus, where the apparatus includes a receiving unit, a processing unit, and a same-source-data determining unit;
the receiving unit is configured to receive first data from a first transmission channel;
the processing unit is configured to process the first data;
the receiving unit is further configured to receive second data from a second transmission channel;
the same-source-data determining unit is configured to determine whether the second data and the first data come from a same information source; and
the processing unit is further configured to process the second data if the first data and the second data are data from the same information source, where
a size of the first data is different from a size of the second data, and a transmission delay of the first transmission channel is different from a transmission delay of the second transmission channel.

According to a sixth aspect, an embodiment of the present invention provides a receive end device, where the receive end device includes a receiver and a processor, where
the receiver is configured to receive first data from a first transmission channel;
the processor is configured to process the first data;
the receiver is further configured to receive second data from a second transmission channel; and
the processor is further configured to determine whether the second data and the first data come from a same information source, and process the second data if the first data and the second data are data from the same information source, where
a size of the first data is different from a size of the second data, and a transmission delay of the first transmission channel is different from a transmission delay of the second transmission channel.

In this embodiment of the present invention, data of different sizes is received from different transmission channels with different delays, so as to satisfy a requirement of a user for a transmission delay and also satisfy a requirement of the user for transmission reliability.

In one example, the size of the first data is smaller than the size of the second data, and the transmission delay of the first transmission channel is lower than the transmission delay of the second transmission channel.

In one example, the determining whether the second data and the first data come from a same information source includes any one or more of the following:
determining, by using identifiers of corresponding fields in the first data and the second data, whether the first data and the second data come from the same information source;
determining, by using a channel identifier of the first data and a channel identifier of the second data, whether the first data and the second data come from the same information source; and
determining, by using one or more of a source IP address, a channel type, and a service type included in each of the first data and the second data, whether the first data and the second data come from the same information source.

In one example, that a transmission delay of the first transmission channel is different from a transmission delay of the second transmission channel includes any one or more of the following:
a quantity of communications devices on the first transmission channel is different from a quantity of communications devices on the second transmission channel;
an access mode of an access device on the first transmission channel is different from an access mode of an access device on the second transmission channel;
a frequency band that is used by the first transmission channel is different from a frequency band that is used by the second transmission channel;
a coverage area of the access device on the first transmission channel is different from a coverage area of the access device on the second transmission channel; and
a capacity of the first transmission channel is different from a capacity of the second transmission channel.

In the embodiments of the present invention, a plurality of pieces of data of different sizes are generated based on the to-be-transmitted data, and a transmission channel with a low delay is used to transmit data with a small size, so as to satisfy a requirement of a user for a transmission delay; and a transmission channel with a high delay is used to transmit data with a large size, so as to satisfy a pursuit of details from the user. Therefore, the embodiments of the present invention can simultaneously achieve a low delay, high reliability, and a high rate of data transmission.

### BRIEF DESCRIPTION OF DRAWINGS

FIG. 1 is a schematic diagram of an application scenario according to an embodiment of the present invention;
FIG. 2 is a schematic diagram of a data transmission method according to an embodiment of the present invention;
FIG. 3 is a schematic diagram of a data transmission apparatus according to an embodiment of the present invention;
FIG. 4 is a schematic diagram of another data transmission apparatus according to an embodiment of the present invention;
FIG. 5 is a schematic diagram of a transmit end device according to an embodiment of the present invention; and
FIG. 6 is a schematic diagram of a receive end device according to an embodiment of the present invention.

### DESCRIPTION OF EMBODIMENTS

To make the objectives, technical solutions, and advantages of the embodiments of the present invention clearer, the following describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

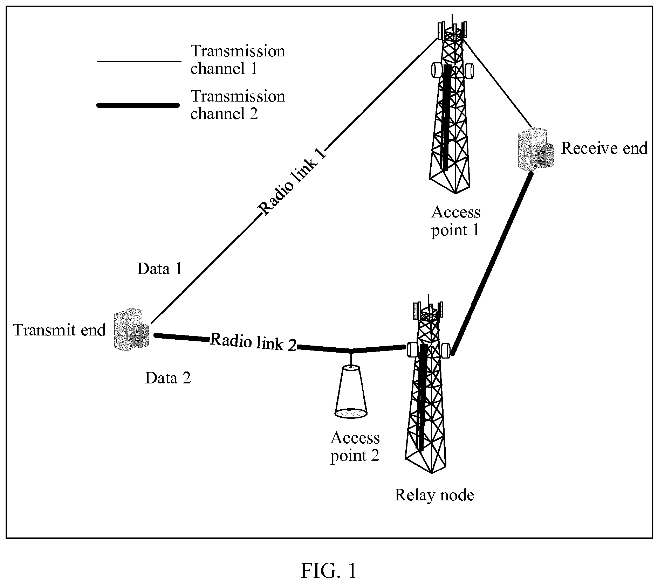

FIG. 1 is a schematic diagram of an application scenario according to an embodiment of the present invention.

To send data to a receive end device, a transmit end device first processes to-be-transmitted data to obtain at least data 1 and data 2. For example, the transmit end device compresses the to-be-transmitted data based on different compression ratios, to obtain the data 1 and the data 2 that are with different sizes. Assuming that the size of the data 1 is smaller than the size of the data 2, the data 1 is sent to the receive end device by using a transmission channel 1 with a low transmission delay, and the data 2 is sent to the receive end device by using a transmission channel 2 with a high transmission delay. To be specific, the transmit end device transmits the data 1 to an access point 1 by using a radio link 1, and the access point 1 transmits the data 1 to the receive end device; the transmit end device transmits the data 2 to an access point 2 by using the access point 2, the access point 2 transmits the data 2 to a relay node, and then the relay node transmits the data 2 to the receive end device.

Because a delay of the transmission channel 1 is lower than that of the transmission channel 2, the receive end device first receives the data 1 from the transmit end device, and the receive end device processes the data 1 and then sends the data 1 to an application layer to present the data 1 to a user. Within a time for the receive end device to process the data 1, the transmission channel 2 transmits the data 2 to the receive end device. The receive end device determines whether the data 2 and the data 1 are data from a same information source. If the data 2 and the data 1 are data from the same information source, the receive end device processes the data 2 and then sends the data 2 to the application layer to present the data 2 to the user. The size of the data 2 is larger than the size of data 1, and the data 2 includes a larger amount of information than the data 1. Therefore, the receive end device can obtain more detailed information by receiving the data 2, so as to satisfy a requirement of the user for a high transmission rate and high transmission reliability. In addition, the size of the data 1 is smaller, and the data 1 is transmitted by using the transmission channel with a low delay, so that a time for the receive end device to receive the data 1 and a time for the receive end device to process the data 1 and present the data 1 to the user are shorter, thereby satisfying a delay requirement of the user.

It should be noted that the transmit end device may be a terminal, user equipment, a data center, a server, or the like; the receive end device may also be a terminal, user equipment, a data center, a server, or the like; the access point may be an access device such as a base station, a wireless access point, a transceiver station, and a relay node. Transmission between the transmit end device and the receive end device may be implemented by using radio waves, or by using visible light, laser, a power line, infrared, an optical fiber, a coaxial cable, a copper strand, a quantum transmission channel, or the like.

In addition, the application scenario of this embodiment of the present invention is not limited to that shown in FIG. 1. This embodiment of the present invention can be applied to any wired or wireless communications system, such as an LTE system, an LTE-Advanced system, and an IEEE802.11ad system, and this embodiment of the present invention is particularly applicable to the fifth generation mobile communications system IMT-2020.

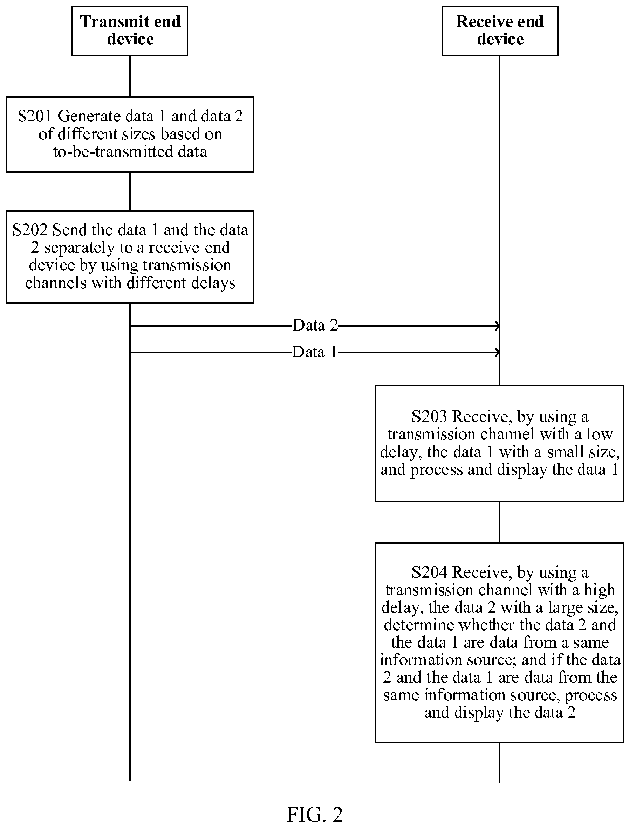

FIG. 2 is a schematic diagram of a data transmission method according to an embodiment of the present invention.

Step 201: A transmit end device generates at least data 1 and data 2 based on to-be-transmitted data, where the data 1 and the data 2 are with different sizes.

It should be noted that the transmit end device may generate any plurality of pieces of data of different sizes based on the to-be-transmitted data. The following provides description by using only an example in which two pieces of data of different sizes, the data 1 and the data 2, are generated.

In one example, each of corresponding fields in a plurality of pieces of data generated by the transmit end device based on the to-be-transmitted data includes an identifier, and the identifiers are used to indicate whether the plurality of pieces of data come from a same information source.

For example, the transmit end device numbers the to-be-transmitted data according to a data sending order. For example, if a number of a piece of to-be-transmitted data is 0101, corresponding fields of the data 1 and the data 2 generated based on the to-be-transmitted data numbered 0101 include the number 0101, and the number 0101 is used to indicate that the data 1 and the data 2 come from the to-be-transmitted data numbered 0101.

In one example, the transmit end device compresses the to-be-transmitted data based on different compression ratios, to obtain the data 1 and the data 2 of different sizes. In other words, the data 1 and the data 2 are data of different sizes obtained by the transmit end device by compressing the to-be-transmitted data based on different compression ratios. Therefore, the data 1 and the data 2 come from a same information source.

For example, the to-be-transmitted data is video data, and the video data is compressed based on different compression ratios, to obtain data 1 and data 2 of different sizes. Assuming that a compression ratio of the data 1 is higher than a compression ratio of the data 2, size of the data 1 is smaller than size of the data 2, a resolution of the data 1 is lower, and a resolution of the data 2 is higher. In this case, at a receive end, the low-resolution data 1 may be first received and processed, and presented to a user, and then the high-resolution data 2 is received and processed, and presented to the user (a specific implementation is described in detail below). Therefore, this embodiment of the present invention can satisfy a requirement of the user for a low delay in receiving data, and can also satisfy requirements of the user for a high transmission rate and high reliability in receiving data.

In another example, the transmit end device obtains basic data and enhanced data from the to-be-transmitted before transmitting the data. The basic data is data, with an important function and a small amount of information content, that is obtained by using the to-be-transmitted data, and the enhanced data is data, with a secondary function and a large amount of information content, that is obtained by using the to-be-transmitted data. In addition, the enhanced data may also be all data information included in the to-be-transmitted data. In other words, the basic data is data that is from the to-be-transmitted data, is urgently needed for the receive end, and is with a small size, so as to satisfy a requirement of the user for a low delay in receiving data; the enhanced data is data that is from the to-be-transmitted data, provides more detailed information for the receive end, and is with a large size, so as to satisfy a requirement of the user for high reliability in receiving data.

For example, in smart medical care, the basic data is data that has an important function and that is with a small size (namely, the data 1), such as blood pressure, heartbeat, an electrocardiograph, and a body temperature; the enhanced data is data that has a relatively secondary function and that is with a large size (namely, the data 2), such as video data. For another example, in industrial control, the to-be-transmitted data is mechanical arm movement control data, the basic data (the data 1) is a moving direction of a mechanical arm that is obtained from the mechanical arm movement control data, and the enhanced data (the data 2) is a movement value of the mechanical arm that is obtained from the mechanical arm movement control data.

Therefore, the transmit end device generates, based on the to-be-transmitted data, a plurality of pieces of data with different sizes, for example, generates the data 1 and the data 2, where the size of the data 1 is smaller than the size of the data 2, the data 2 may include partial information or all information of the data 1 to enhance information transmission reliability, and the data 2 may alternatively not include any information in the data 1 to reduce resources for data transmission.

Step 202: The transmit end device separately transmits, by using transmission channels with different delays, a plurality of pieces of data of different sizes, such as the data 1 and the data 2, that are generated based on the to-be-transmitted data. In other words, the transmit end device sends the data 1 and the data 2 of different sizes separately to the receive end device by using the transmission channels with different delays.

In one example, the data 1 with a small size is sent to the receive end device by using a transmission channel 1 with a low delay, and the data 2 with a large size is sent to the receive end device by using a transmission channel with a high delay. Specifically, this can be implemented in one or more of the following manners:
(1) Among the plurality of pieces of data of different sizes that are generated based on the to-be-transmitted data, data with a small size is transmitted by using a transmission channel on which there are a small quantity of communications devices, and data with a large size is transmitted by using a transmission channel on which there are a large quantity of communications devices. In other words, assuming that the size of the data 1 is small, the size of the data 2 is large, the transmission delay of the transmission channel 1 is low, and the transmission delay of the transmission channel 2 is high, the data 1 is transmitted by using the transmission channel 1, and the data 2 is transmitted by using the transmission channel 2.
   As shown in FIG. 1, the size of the data 1 is smaller than the size of the data 2, the transmit end device transmits the data 1 to an access point 1 by using a radio link 1, and then the access point 1 transmits the data 1 to the receive end device by using the access point 1. The transmit end device transmits the data 2 to an access point 2 by using a radio link 2; after processing the data 2, the access point 2 transmits the data 2 to a relay node, and then the relay node transmits the data 2 to the receive end device. It can be learned that the transmit end device sends the data 1 to the receive end device by using the transmission channel 1 on which there are a small quantity of communications devices (including only the access point 1), and sends the data 2 to the receive end device by using the transmission channel 2 on which there are a large quantity of communications devices (including the access point 2 and the relay node), so that the data 1 with a small size is transmitted by using the transmission channel 1 with a low delay, and the data 2 with a large size is transmitted by using the transmission channel 2 with a high delay.
(2) The plurality of pieces of data of different sizes that are generated based on the to-be-transmitted data are separately transmitted by using transmission channels corresponding to different access modes.
   Access modes of access devices of a plurality of transmission channels are different, and therefore transmission delays of the transmission channels are different. For example, the transmit end device transmits the data 1 to the access point 1 by using the radio link 1, the access point 1 is co-located with the receive end device (for example, the receive end device is a data center, and the access point 1 and the data center are connected by using an internal interconnection line), and the access point 1 transmits the data 1 to the receive end device by using an internal interconnection line. The transmit end device transmits the data 2 to the access point 2 by using the radio link 2, and the access point 2 transmits the data 2 to the receive end device by using an optical fiber. Access modes corresponding to the transmission channels for transmitting the data 1 and the data 2 are different, and therefore delays in transmitting the data 1 and the data 2 are different, so that the data 1 with a small size can be transmitted by using a transmission channel with a low delay, and the data 2 with a large size is transmitted by using a transmission channel with a high delay.
(3) Among the plurality of pieces of data of different sizes that are generated based on the to-be-transmitted data, data with a small size is transmitted by using a low-frequency-band radio link, and data with a large size is transmitted by using a high-frequency-band radio link.
   On the low-frequency-band radio link, channel quality is good, reliability is high, and there are a small quantity of retransmission times, so that a delay in transmitting data by using the low-frequency-band radio link is low; on the contrary, a transmission delay in transmitting data by using the high-frequency-band radio link is high. The transmit end device transmits, by using the low-frequency-band radio link, the data 1 with a small size, for example, by using a frequency band below 6 GHz; the transmit end device transmits, by using the high-frequency-band radio link, the data 2 with a large size, for example, by using a millimeter-wave frequency band. In this way, the data with a small size is transmitted by using a transmission channel with a low delay, and the data with a large size is transmitted by using a transmission channel with a high delay.
(4) The data 1 with a small size is transmitted by using the transmission channel 1, and the data 2 with a large size is transmitted by using the transmission channel 2. In addition, a coverage area of an access device on the transmission channel 1 is large, and a coverage area of an access device on the transmission channel 2 is small. For example, the access device on the transmission channel 1 is a macro station, and the access device on the transmission channel 2 is a small cell.
(5) The data 1 with a small size is transmitted by using a small-capacity transmission channel, and the data 2 with a large size is transmitted by using a large-capacity transmission channel. For example, the data 1 is transmitted by using a transmission channel with a channel rate of 100 Mbps, and the data 2 is transmitted by using a transmission channel with a channel rate of 1 Gbps.

In addition, the data 1 with a small size may be transmitted by using a small-capacity transmission channel, and the data 2 with a large size may be transmitted by using a large-capacity transmission channel. In this case, a total delay required for transmitting the data 1 and the data 2 is lower.

Alternatively, the data 1 with a small size may be transmitted by using a large-capacity transmission channel, and the data 2 with a large size may be transmitted by using a small-capacity transmission channel. In this case, a delay in transmitting the data 1 is lower, and the receive end device can receive the data 1 in a shorter time, so that the user can obtain required information in time, thereby improving user experience. In one example, an access device sends related information of its corresponding transmission channel to the transmit end device. For example, the access device sends information, such as capacity and reliability of its corresponding transmission channel, to the transmit end device. The transmit end device determines, based on related information of each transmission channel, an amount of data generated based on the to-be-transmitted data, determines information included in data with a large size (the data 2), such as information about whether the data 2 includes information about the data 1, and selects a corresponding transmission channel for each piece of generated data (the data 1 and the data 2), and so on.

Step 203: The receive end device receives, by using a transmission channel with a low transmission delay, data with a small size. For example, the receive end device receives the data 1 by using a transmission channel 1, processes and displays the data 1, and obtains, from the data 1, information used to indicate a source of the data 1.

Step 204: The receive end device receives, by using a transmission channel with a high transmission delay, data with a large size. For example, the receive end device receives the data 2 by using a transmission channel 2, and determines whether the data 2 and the previously received data 1 are data from a same information source. If the data 2 and the previously received data 1 are data from the same information source, the data 2 is processed and displayed.

The receive end device may determine, in one or more of the following manners, whether the plurality of pieces of data are data from a same information source:
determining, by using an identifier of a corresponding field of each piece of data in the plurality of pieces of data, whether the plurality of pieces of data come from the same information source;
determining, by using a channel identifier of each piece of data in the plurality of pieces of data, whether the plurality of pieces of data come from the same information source; and
determining, by using one or more of a source IP address, a channel type, and a service type included in each piece of data in the plurality of pieces of data, whether the plurality of pieces of data come from the same information source.

In an application scenario, the transmit end device generates two pieces of data of different sizes based on the to-be-transmitted data, that is, the data 1 and the data 2. The transmit end device transmits the data 1 with a small size to the receive end device by using the transmission channel 1 with a low delay, and transmits the data 2 with a large size to the receive end device by using the transmission channel 2 with a high delay. The delay of the transmission channel 1 is low, so that the receive end device first receives the data 1, processes the data 1 and presents the data 1 to the user, and obtains, from the data 1, information used to indicate a source of the data 1. Usually, a time for the receive end device to process the data 1 and present the data 1 to the user is more than 20 ms, and 20 ms is sufficient for the data 2 to be transmitted to the receive end device by using the transmission channel 2 with a high delay. After receiving the data 2, the receive end device obtains, from the data 2, information used to indicate a source of the data 2, and matches the information about the source of the data 2 with the information used to indicate the source of the data 1, to determine whether the data 2 and the data 1 are data from a same information source. If the data 2 and the data 1 are data from the same information source, the data 2 is processed and presented to the user.

Therefore, in this embodiment of the present invention, data with a small size is transmitted by using a transmission channel with a low transmission delay, and data with a large size that is transmitted by using a transmission channel with a high transmission delay is received by using a reaction time of the user. In this way, a requirement of the user for a low delay in transmitting data is satisfied while a requirement of the user for high reliability in transmitting data is also satisfied.

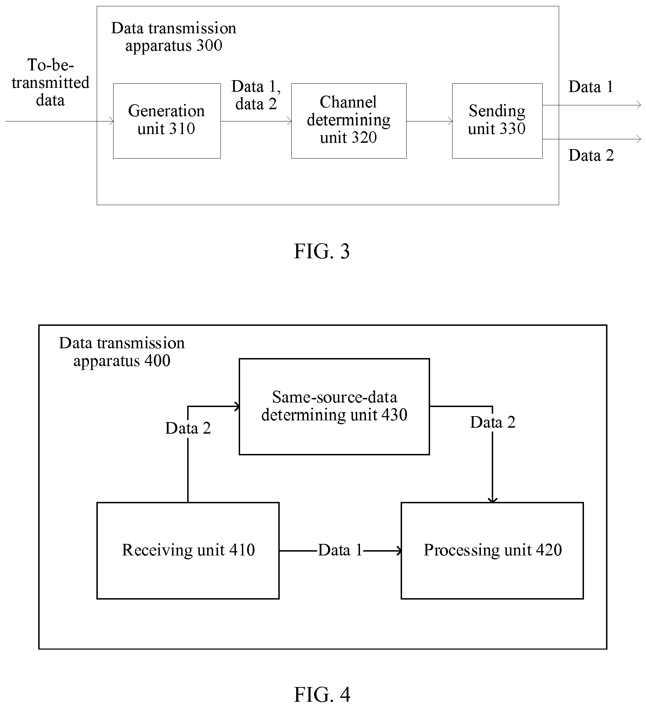

FIG. 3 is a schematic diagram of a data transmission apparatus 300 according to an embodiment of the present invention. The data transmission apparatus 300 includes a generation unit 310, a channel determining unit 320, and a sending unit 330.

The generation unit 310 is configured to generate at least first data and second data based on to-be-transmitted data, where a size of the first data and a size of the second data are different.

The sending unit 330 is configured to send the first data by using a first transmission channel, and send the second data by using a second transmission channel, where a transmission delay of the first transmission channel is different from a transmission delay of the second transmission channel.

In one example, the size of the first data is smaller than the size of the second data, and the transmission delay of the first transmission channel is lower than the transmission delay of the second transmission channel.

In one example, the first data includes a first identifier, and the second data includes a second identifier, where the first identifier and the second identifier are used to indicate whether the first data and the second data come from a same information source.

In one example, the generation unit 310 is specifically configured to compress the to-be-transmitted data based on different compression ratios, to obtain the first data and the second data that are with different sizes.

In another example, the generation unit 310 is specifically configured to obtain basic data and enhanced data from the to-be-transmitted data. The basic data is data, with an important function and small size, that is obtained by using the to-be-transmitted data, and the enhanced data is data, with a secondary function and large size, that is obtained by using the to-be-transmitted data.

In one example, the channel determining unit 320 is configured to determine the first transmission channel and the second transmission channel by using any one or more of the following manners:
a quantity of communications devices on the first transmission channel is different from a quantity of communications devices on the second transmission channel;
an access mode of an access device on the first transmission channel is different from an access mode of an access device on the second transmission channel;
a frequency band that is used by the first transmission channel is different from a frequency band that is used by the second transmission channel;
a coverage area of the access device on the first transmission channel is different from a coverage area of the access device on the second transmission channel; and
a capacity of the first transmission channel is different from a capacity of the second transmission channel.

FIG. 4 shows another data transmission apparatus 400 according to an embodiment of the present invention. The data transmission apparatus 400 includes a receiving unit 410, a processing unit 420, and a same-source-data determining unit 430.

The receiving unit 410 is configured to receive first data from a first transmission channel.

The processing unit 420 is configured to process the first data.

The receiving unit 410 is further configured to receive second data from a second transmission channel.

The same-source-data determining unit 430 is configured to determine whether the second data and the first data come from a same information source.

The processing unit 420 is further configured to process the second data if the first data and the second data are data from the same information source.

A size of the first data is different from a size of the second data, and a transmission delay of the first transmission channel is different from a transmission delay of the second transmission channel.

In one example, the size of the first data is smaller than the size of the second data, and the transmission delay of the first transmission channel is lower than the transmission delay of the second transmission channel.

In one example, the same-source-data determining unit 430 is further configured to: determine, by using identifiers of corresponding fields in the first data and the second data, whether the first data and the second data come from the same information source; or determine, by using a channel identifier of the first data and a channel identifier of the second data, whether the first data and the second data come from the same information source; or determine, by using one or more of a source IP address, a channel type, and a service type included in each of the first data and the second data, whether the first data and the second data come from the same information source.

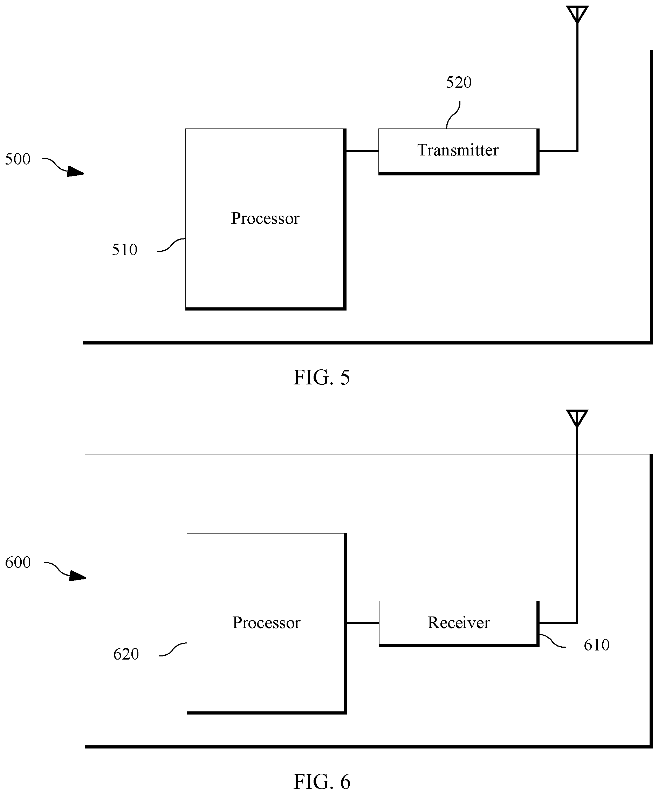

FIG. 5 is a schematic diagram of a transmit end device 500 according to an embodiment of the present invention. The transmit end device 500 includes a processor 510 and a transmitter 520.

The processor 510 is configured to generate at least first data and second data based on to-be-transmitted data, where a size of the first data and a size of the second data are different.

The transmitter 520 is configured to send the first data by using a first transmission channel, and send the second data by using a second transmission channel, where a transmission delay of the first transmission channel is different from a transmission delay of the second transmission channel.

In one example, the size of the first data is smaller than the size of the second data, and the transmission delay of the first transmission channel is lower than the transmission delay of the second transmission channel.

In one example, the first data includes a first identifier, and the second data includes a second identifier, where the first identifier and the second identifier are used to indicate whether the first data and the second data come from a same information source.

In one example, the processor 510 is specifically configured to compress the to-be-transmitted data based on different compression ratios, to obtain the first data and the second data that are with different sizes.

In another example, the processor 510 is specifically configured to obtain basic data and enhanced data from the to-be-transmitted data. The basic data is data, with an important function and small size, that is obtained by using the to-be-transmitted data, and the enhanced data is data, with a secondary function and large size, that is obtained by using the to-be-transmitted data.

In one example, the processor 510 determines the first transmission channel and the second transmission channel by using one or more of the following manners:
a quantity of communications devices on the first transmission channel is different from a quantity of communications devices on the second transmission channel;
an access mode of an access device on the first transmission channel is different from an access mode of an access device on the second transmission channel;
a frequency band that is used by the first transmission channel is different from a frequency band that is used by the second transmission channel;
a coverage area of the access device on the first transmission channel is different from a coverage area of the access device on the second transmission channel; and
a capacity of the first transmission channel is different from a capacity of the second transmission channel.

FIG. 6 is a schematic diagram of a receive end device 600 according to an embodiment of the present invention. The receive end device 600 includes a receiver 610 and a processor 620.

The receiver 610 is configured to receive first data from a first transmission channel.

The processor 620 is configured to process the first data.

The receiver 610 is further configured to receive second data from a second transmission channel.

The processor 620 is further configured to determine whether the second data and the first data come from a same information source, and process the second data if the first data and the second data are data from the same information source.

A size of the first data is different from a size of the second data, and a transmission delay of the first transmission channel is different from a transmission delay of the second transmission channel.

In one example, the size of the first data is smaller than the size of the second data, and the transmission delay of the first transmission channel is lower than the transmission delay of the second transmission channel.

In another example, the processor 620 is further configured to: determine, by using identifiers of corresponding fields in the first data and the second data, whether the first data and the second data come from the same information source; or determine, by using a channel identifier of the first data and a channel identifier of the second data, whether the first data and the second data come from the same information source; or determine, by using one or more of a source IP address, a channel type, and a service type included in each of the first data and the second data, whether the first data and the second data come from the same information source.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

A person of ordinary skill in the art may understand that all or some of the steps in each of the foregoing methods of the embodiments may be implemented by a program instructing a processor. The foregoing program may be stored in a computer readable storage medium. The storage medium is a non-transitory (non-transitory) medium, such as a random-access memory, a read-only memory, a flash memory, a hard disk, a solid state drive, a magnetic tape (magnetic tape), a floppy disk (floppy disk), an optical disc (optical disc), or any combination thereof.

The foregoing descriptions are merely examples of specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data transmission method, wherein the method comprises:
generating (201), by a transmit end device, at least first data and second data based on to-be-transmitted data, wherein a size of the first data is smaller than a size of the second data, wherein the first data comprises a first identifier, and the second data comprises a second identifier, wherein the first identifier and the second identifier are used to indicate whether the first data and the second data come from a same information source; and
sending (202), by the transmit end device, the first data by using a first transmission channel, and sending the second data by using a second transmission channel, wherein a transmission delay of the first transmission channel is lower than a transmission delay of the second transmission channel, wherein the generating, by a transmit end device, at least first data and second data based on to-be-transmitted data, is specifically:
compressing, by the transmit end device, the to-be-transmitted data based on different compression ratios, to obtain the first data and the second data that are with different sizes; wherein the compression ratio used for obtaining the first data is higher than the compression ratio used for obtaining the second data and the first data has smaller size than the size of the second data and the first data has a resolution that is lower than a resolution of the second data, whereby the to-be-transmitted data is video data;
wherein that a transmission delay of the first transmission channel is lower than a transmission delay of the second transmission channel comprises any one or more of the following:
a quantity of communications devices on the first transmission channel is different from a quantity of communications devices on the second transmission channel;
an access mode of an access device on the first transmission channel is different from an access mode of an access device on the second transmission channel;
a frequency band that is used by the first transmission channel is different from a frequency band that is used by the second transmission channel;
a coverage area of the access device on the first transmission channel is different from a coverage area of the access device on the second transmission channel; and
a capacity of the first transmission channel is different from a capacity of the second transmission channel.

2. A data transmission apparatus, comprising:
a generation unit (310), configured to generate at least first data and second data based on to-be-transmitted data, wherein a size of the first data is smaller than a size of the second data, a size of the first data and a size of the second data are different wherein the first data comprises a first identifier, and the second data comprises a second identifier, wherein the first identifier and the second identifier are used to indicate whether the first data and the second data come from a same information source; and
a sending unit (320), configured to send the first data by using a first transmission channel, and send the second data by using a second transmission channel, wherein a transmission delay of the first transmission channel is lower than a transmission delay of the second transmission channel, wherein the generation unit is specifically configured to:
compress the to-be-transmitted data based on different compression ratios, to obtain the first data and the second data that are with different sizes, wherein the compression ratio used for obtaining the first data is higher than the compression ratio used for obtaining the second data and the first data has smaller size than the size of the second data and the first data has a resolution that is lower than a resolution of the second data, whereby the to-be-transmitted data is video data; , and the enhanced data is data, with a secondary function and large size, that is obtained by using the to-be-transmitted data, wherein the apparatus further comprises a channel determining unit, and the channel determining unit is configured to determine the first transmission channel and the second transmission channel by using any one or more of the following manners:
a quantity of communications devices on the first transmission channel is different from a quantity of communications devices on the second transmission channel;
an access mode of an access device on the first transmission channel is different from an access mode of an access device on the second transmission channel;
a frequency band that is used by the first transmission channel is different from a frequency band that is used by the second transmission channel;
a coverage area of the access device on the first transmission channel is different from a coverage area of the access device on the second transmission channel; and
a capacity of the first transmission channel is different from a capacity of the second transmission channel.

3. A computer readable medium storing program instruction, wherein the program instruction is executed to perform the method according to claim 1.

## Patentansprüche

1. Datenübertragungsverfahren, wobei das Verfahren umfasst:
Erzeugen (201) von mindestens ersten Daten und zweiten Daten basierend auf zu übertragenden Daten durch eine Übertrageendvorrichtung, wobei eine Größe der ersten Daten kleiner ist als eine Größe der zweiten Daten, wobei die ersten Daten einen ersten Bezeichner umfassen, und die zweiten Daten einen zweiten Bezeichner umfassen, wobei der erste Bezeichner und der zweite Bezeichner verwendet werden, um anzugeben, ob die ersten Daten und die zweiten Daten von derselben Informationsquelle stammen; und
Senden (202) der ersten Daten durch die Übertrageendvorrichtung durch Verwenden eines ersten Übertragungskanals, und Senden der zweiten Daten durch Verwenden eines zweiten Übertragungskanals, wobei eine Übertragungsverzögerung des ersten Übertragungskanals geringer ist als eine Übertragungsverzögerung des zweiten Übertragungskanals, wobei das Erzeugen von mindestens ersten Daten und zweiten Daten basierend auf zu übertragenden Daten durch eine Übertrageendvorrichtung speziell Folgendes ist:
Komprimieren der zu übertragenden Daten durch die Übertrageendvorrichtung, basierend auf unterschiedlichen Komprimierungsverhältnissen, um die ersten Daten und die zweiten Daten mit unterschiedlichen Größen zu erhalten; wobei das zum Erhalten der ersten Daten verwendete Komprimierungsverhältnis größer ist als das zum Erhalten der zweiten Daten verwendete Komprimierungsverhältnis und die ersten Daten eine kleinere Größe aufweisen als die Größe der zweiten Daten und die ersten Daten eine Auflösung aufweisen, die niedriger ist als eine Auflösung der zweiten Daten, wobei die zu übertragenden Daten Videodaten sind;
wobei, dass eine Übertragungsverzögerung des ersten Übertragungskanals geringer ist als eine Übertragungsverzögerung des zweiten Übertragungskanals, Folgendes umfasst:
eine Anzahl von Kommunikationsvorrichtungen auf dem ersten Übertragungskanal unterscheidet sich von einer Anzahl von Kommunikationsvorrichtungen auf dem zweiten Übertragungskanal;
einen Zugriffsmodus einer Zugriffsvorrichtung auf dem ersten Übertragungskanal unterscheidet sich von einem Zugriffsmodus einer Zugriffsvorrichtung auf dem zweiten Übertragungskanal;
ein Frequenzband, das durch den ersten Übertragungskanal verwendet wird, unterscheidet sich von einem Frequenzband, das durch den zweiten Übertragungskanal verwendet wird;
einen Abdeckungsbereich der Zugriffsvorrichtung auf dem ersten Übertragungskanal unterscheidet sich von einem Abdeckungsbereich der Zugriffsvorrichtung auf dem zweiten Übertragungskanal; und/oder
eine Kapazität des ersten Übertragungskanals unterscheidet sich von einer Kapazität des zweiten Übertragungskanals.

2. Datenübertragungseinrichtung, umfassend:
eine Erzeugungseinheit (310), die konfiguriert ist, um mindestens erste Daten und zweite Daten basierend auf zu übertragenden Daten zu erzeugen, wobei eine Größe der ersten Daten kleiner ist als eine Größe der zweiten Daten, wobei eine Größe der ersten Daten und eine Größe der zweiten Daten unterschiedlich ist, wobei die ersten Daten einen ersten Bezeichner umfassen, und die zweiten Daten einen zweiten Bezeichner umfassen, wobei der erste Bezeichner und der zweite Bezeichner verwendet werden, um anzugeben, ob die ersten Daten und die zweiten Daten von derselben Informationsquelle stammen; und
eine Sendeeinheit (320), die konfiguriert ist, um die ersten Daten durch Verwenden eines ersten Übertragungskanals zu senden, und die zweiten Daten durch Verwenden eines zweiten Übertragungskanals zu senden, wobei eine Übertragungsverzögerung des ersten Übertragungskanals geringer ist als eine Übertragungsverzögerung des zweiten Übertragungskanal, wobei die Erzeugungseinheit speziell für Folgendes konfiguriert ist:
Komprimieren der zu übertragenden Daten basierend auf unterschiedlichen Komprimierungsverhältnissen, um die ersten Daten und die zweiten Daten mit unterschiedlichen Größen zu erhalten, wobei das zum Erhalten der ersten Daten verwendete Komprimierungsverhältnis größer ist als das zum Erhalten der zweiten Daten verwendete Komprimierungsverhältnis und die ersten Daten eine kleinere Größe aufweisen als die Größe der zweiten Daten und die ersten Daten eine Auflösung aufweisen, die niedriger ist als eine Auflösung der zweiten Daten, wobei die zu übertragenden Daten Videodaten sind; und die erweiterten Daten Daten mit einer sekundären Funktion und einer großen Größe sind, die durch Verwenden der zu übertragenden Daten erhalten werden, wobei die Einrichtung ferner eine Kanalbestimmungseinheit umfasst, und die Kanalbestimmungseinheit konfiguriert ist, um den ersten Übertragungskanal und den zweiten Übertragungskanal durch Verwenden der folgenden Arten zu bestimmen:
eine Anzahl von Kommunikationsvorrichtungen auf dem ersten Übertragungskanal unterscheidet sich von einer Anzahl von Kommunikationsvorrichtungen auf dem zweiten Übertragungskanal;
einen Zugriffsmodus einer Zugriffsvorrichtung auf dem ersten Übertragungskanal unterscheidet sich von einem Zugriffsmodus einer Zugriffsvorrichtung auf dem zweiten Übertragungskanal;
ein Frequenzband, das durch den ersten Übertragungskanal verwendet wird, unterscheidet sich von einem Frequenzband, das durch den zweiten Übertragungskanal verwendet wird;
einen Abdeckungsbereich der Zugriffsvorrichtung auf dem ersten Übertragungskanal unterscheidet sich von einem Abdeckungsbereich der Zugriffsvorrichtung auf dem zweiten Übertragungskanal; und/oder
eine Kapazität des ersten Übertragungskanals unterscheidet sich von einer Kapazität des zweiten Übertragungskanals.

3. Computerlesbares Medium, das einen Programmbefehl speichert, wobei der Programmbefehl ausgeführt wird, um das Verfahren nach Anspruch 1 durchzuführen.

## Revendications

1. Procédé de transmission de données, dans lequel le procédé comprend :
la génération (201), par un dispositif terminal de transmission, d'au moins des premières données et des secondes données en fonction des données à transmettre, dans lequel une taille des premières données est inférieure à une taille des secondes données, dans lequel les premières données comprennent un premier identifiant, et les secondes données comprennent un second identifiant, dans lequel le premier identifiant et le second identifiant sont utilisés pour indiquer si les premières données et les secondes données proviennent ou non d'une même source d'informations ; et
l'envoi (202), par le dispositif terminal de transmission, des premières données en utilisant un premier canal de transmission, et l'envoi des secondes données en utilisant un second canal de transmission, dans lequel un délai de transmission du premier canal de transmission est inférieur à un délai de transmission du second canal de transmission, dans lequel la génération, par un dispositif terminal de transmission, d'au moins des premières données et des secondes données en fonction des données à transmettre, est spécifiquement :
la compression, par le dispositif terminal de transmission, des données à transmettre en fonction de différents taux de compression, pour obtenir les premières données et les secondes données qui sont de tailles différentes ; dans lequel le taux de compression utilisé pour obtenir les premières données est supérieur au taux de compression utilisé pour obtenir les secondes données et les premières données ont une taille plus petite que la taille des secondes données et les premières données ont une résolution qui est inférieure à une résolution des secondes données, selon lequel les données à transmettre sont des données vidéo ;
dans lequel le fait qu'un délai de transmission du premier canal de transmission est inférieur à un délai de transmission du second canal de transmission comprend :
une quantité de dispositifs de communication sur le premier canal de transmission est différente d'une quantité de dispositifs de communication sur le second canal de transmission ;
un mode d'accès d'un dispositif d'accès sur le premier canal de transmission est différent d'un mode d'accès d'un dispositif d'accès sur le second canal de transmission ; et/ou
une bande de fréquences qui est utilisée par le premier canal de transmission est différente d'une bande de fréquences qui est utilisée par le second canal de transmission ; et/ou
une zone de couverture du dispositif d'accès sur le premier canal de transmission est différente d'une zone de couverture du dispositif d'accès sur le second canal de transmission ; et/ou
une capacité du premier canal de transmission est différente d'une capacité du second canal de transmission.

2. Appareil de transmission de données, comprenant :
une unité de génération (310), configurée pour générer au moins des premières données et des secondes données en fonction de données à transmettre, dans lequel une taille des premières données est inférieure à une taille des secondes données, la taille des premières données et la taille des secondes données sont différentes, les premières données comprenant un premier identifiant et les secondes données comprenant un second identifiant, le premier identifiant et le second identifiant étant utilisés pour indiquer si les premières données et les secondes données proviennent ou non d'une même source d'informations ; et
une unité d'envoi (320), configurée pour envoyer les premières données en utilisant un premier canal de transmission, et envoyer les secondes données en utilisant un second canal de transmission, dans lequel un délai de transmission du premier canal de transmission est inférieur à un délai de transmission du second canal de transmission, dans lequel l'unité de génération est spécifiquement configurée pour :
compresser les données à transmettre en fonction de différents taux de compression, pour obtenir les premières données et les secondes données qui sont de tailles différentes, dans lequel le taux de compression utilisé pour obtenir les premières données est supérieur au taux de compression utilisé pour obtenir les secondes les données et les premières données ont une taille plus petite que la taille des secondes données et les premières données ont une résolution qui est inférieure à une résolution des secondes données, selon lequel les données à transmettre sont des données vidéo ; et les données améliorées sont des données, présentant une fonction secondaire et de grande taille, qui sont obtenues en utilisant les données à transmettre, dans lequel l'appareil comprend en outre une unité de détermination de canal, et l'unité de détermination de canal est configurée pour déterminer le premier canal de transmission et le second canal de transmission en utilisant une quelconque ou plusieurs des manières suivantes :
une quantité de dispositifs de communication sur le premier canal de transmission est différente d'une quantité de dispositifs de communication sur le second canal de transmission ;
un mode d'accès d'un dispositif d'accès sur le premier canal de transmission est différent d'un mode d'accès d'un dispositif d'accès sur le second canal de transmission ;
une bande de fréquences qui est utilisée par le premier canal de transmission est différente d'une bande de fréquences qui est utilisée par le second canal de transmission ;
une zone de couverture du dispositif d'accès sur le premier canal de transmission est différente d'une zone de couverture du dispositif d'accès sur le second canal de transmission ; et
une capacité du premier canal de transmission est différente d'une capacité du second canal de transmission.

3. Support lisible par ordinateur stockant une instruction de programme, dans lequel l'instruction de programme est exécutée pour réaliser le procédé selon la revendication 1.
